# EUROPEAN PATENT APPLICATION

(11) **EP 3 718 981 A2**
(43) Date of publication of application: **07.10.2020**
(21) Application number: 20166944.7
(22) Date of filing: 31.03.2020
(51) Int. Cl.: C03C 8/14, B24B 1/00, C03C 14/00, C03C 17/04, F24C 15/00, F24C 15/10

(54) **SPILL RETENTION MECHANISMS FOR COOKTOPS AND OTHER SUBSTRATES**

(30) Priority: 05.04.2019 US 201962829656 P
(71) Applicant: Schott AG, 55122 Mainz (DE); Schott Corporation, Elmsford, NY 10523 (US)
(72) Inventor: LEPCHA, Ashish, 65195 Wiesbaden (DE); MILANOVSKA, Angelina, 55120 Mainz (DE); DECKER, Cynthia, 64283 Darmstadt (DE); WIMMER, Zachary, Louisville, KY Kentucky 40217 (US); MÜLLER, Martin, Louisville, KY Kentucky 40207 (US); KNOCHE, Silke, 55219 Saulheim (DE)
(74) Representative: Harbach, Thomas

(57) **Abstract**

The present disclosure describes spill retention mechanisms for cooktops and other substrates. The spill retention mechanisms can hinder the movement of liquids primarily due to the physical attributes of the mechanisms, unlike hydrophobic mechanisms which hinder movement primarily due to the chemical attributes of the hydrophobic material.

## Description

### BACKGROUND OF THE DISCLOSURE

### 1. Field of the Disclosure

The present disclosure describes spill retention mechanisms for cooktops and other substrates and substrates having said spill retention mechanisms.

### 2. Description of the Related Art

Substrates in the home appliance industry, such as cooktops and refrigerator shelves, may have mechanisms to retain liquids that spill on the surface. One known mechanism is a raised frame that surrounds the perimeter of the substrate. Another known mechanism is a frameless substrate having a hydrophobic material that surrounds the perimeter of the substrate. It is also known to apply a hydrophobic material around certain portions of the substrate such as the heating elements, but hydrophobic materials are not ideal because they are not resistant to high temperatures used with cooktops, may have health concerns when used near food, and can be easily degraded or completely removed when cleaning with abrasives or cleaning liquids.

### SUMMARY OF THE DISCLOSURE

The present disclosure describes spill retention mechanisms for cooktops and other substrates. The spill retention mechanisms can hinder the movement of liquids primarily due to the physical attributes of the mechanisms, unlike hydrophobic mechanisms which hinder movement primarily due to the chemical attributes of the hydrophobic material.

### BRIEF DESCRIPTION OF THE DRAWINGS

Figure 1 shows an embodiment where a spill retention mechanism is applied as a continuous strip around a portion of a cooktop inward from the perimeter.
Figure 2 shows an embodiment where a spill retention mechanism is applied as two parallel lines inward from the perimeter of a cooktop.
Figures 3A-3D show possible locations for spill retention mechanisms.
Figure 4 shows that the surface roughness of a frit can change as particles are added to the frit.

### DETAILED DESCRIPTION OF THE DISCLOSURE

The present disclosure describes substrates that can be used for example in the appliance industry, such as cooktops and refrigerator shelves, which may have one or more spill retention mechanisms to hinder movement of liquids that spill on the substrate surface. The spill retention mechanisms can hinder liquid movement primarily due to the physical properties of the mechanisms.

The spill retention mechanisms can be applied to an upper surface of the substrate in any location desired to retain or hinder the movement of spilled liquids. For example, a spill retention mechanism can be provided to the upper surface of the substrate at one or more of the edges of the substrate in a pattern that surrounds at least a portion of the middle region of the substrate. The pattern can alternatively or additionally be located inward from the perimeter or one or more of the edges (such as about 5 inches, 4 inches, 3 inches, 2 inches or 1 inch inward from the edge, so that a space without the pattern exists between the pattern and the edge of the substrate), can be completely or partially around a segment of the substrate such as the location for a heating element or a control panel, or can be in any other location where it is desired to provide a barrier that hinders the movement of spilled liquids.

The type of substrate is not particularly limited. For example, the substrate can be glass or glass-ceramic, such as lithium aluminosilicate glass-ceramic, and can be transparent or colored. The substrate can be a typical substrate used as a cooktop, such as a substrate having a coefficient of thermal expansion of less than for example 7 x 10⁻⁶/K, or from 1 x 10⁻⁶/K to 4.5 x 10⁻⁶/K, in a temperature range of 20-300 °C. The thickness of the substrate is not limited and can be for example 0.1-40 mm, 1-10 mm, or 3-6 mm.

In some embodiments, the spill retention mechanism comprises a glass or a glass-ceramic frit. The composition of the frit is not particularly limited and can include silicate, borosilicate, zinc silicate, zinc borosilicate, bismuth borosilicate, bismuth silicate, phosphate, zinc phosphate, aluminosilicate, lithium aluminosilicate, or a combination thereof. For non-limiting example, a suitable glass frit is a glass-ceramic material having the composition (wt%) SiO₂ (44-75), Al₂O₃ (0-25), B₂O₃ (0-30), Li₂O (0-12), Na₂O (0-15), K₂O (0-10), CaO (0-12), MgO (0-9), BaO (0-27), SrO (0-4), ZnO (0-20), TiO₂ (0-5), ZrO₂ (0-7), As₂O₃ (0-1), Sb₂O₃ (0-15), F (0-3) and H₂O (0-3).

In some embodiments, the D50 grain size of the frit can be 0.1-60 µm, 0.1-30 µm, 0.1-20 µm, 5-15 µm, 0.5-3 µm, or 0.8-1.8 µm.

Frits are commonly applied to glass and glass-ceramic substrates to provide decoration, but they are not applied in locations or patterns and with compositions or properties that provide adequate hindrance of the movement of spills. The frits of the current disclose may differ in at least this regard.

The frits can be applied to the substrates using any known processes, such as for example by spraying, dipping, knife coating, brushing, pad printing or screen printing. Suitable meshes used for screen printing include those having a thread count of 140 to 56, 140 to 77, or 77 to 54 per cm².

The frits can be burned into the substrate by a drying or curing process. The burning process may be accomplished thermally, for example, by circulating air, or by drying using infrared radiation. Possible temperature ranges include 100-250 °C and 120-200 °C. Curing of the frit layer may be achieved using short-wave UV radiation.

The burning-in process may comprise a temperature process in which the glass frit is initially melted. The temperature may range from 400-1000 °C, from 600-850 °C, or from 750-830 °C.

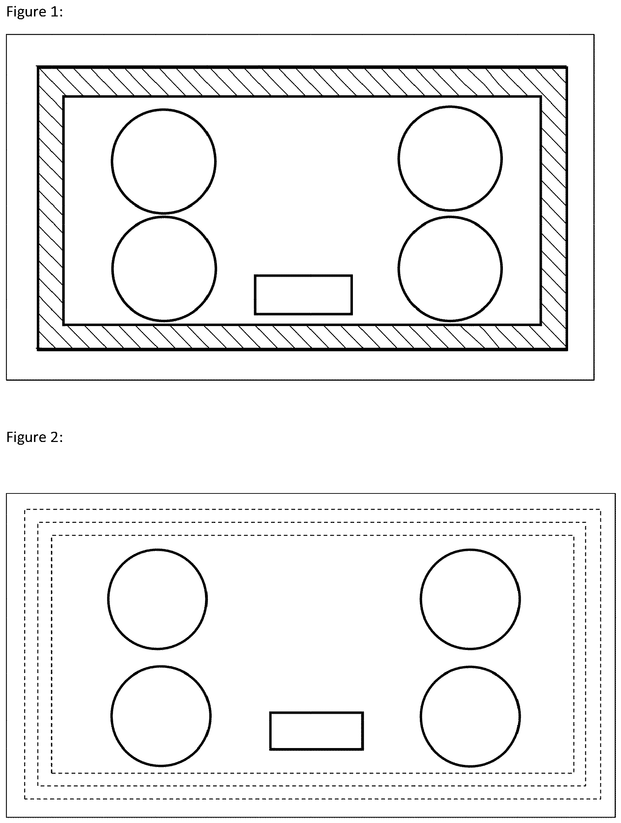

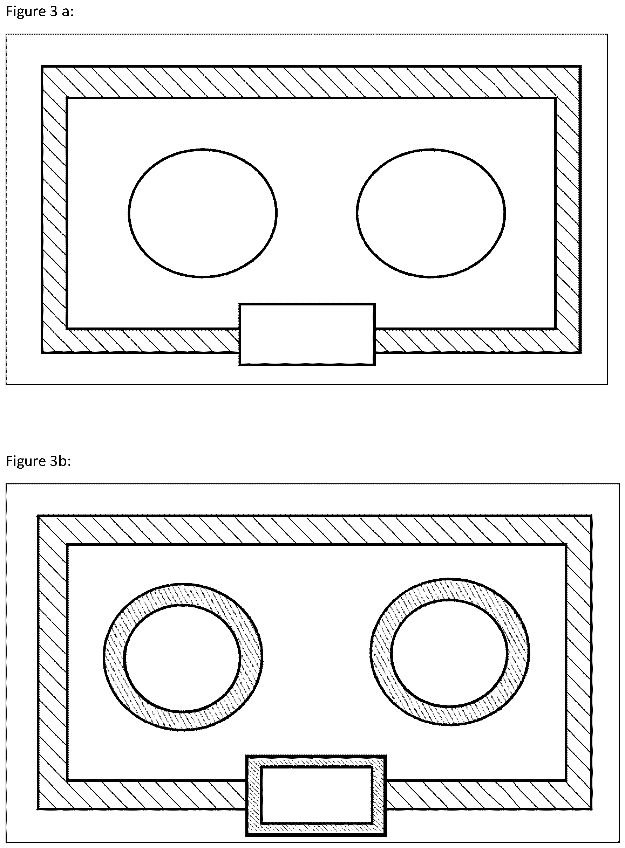

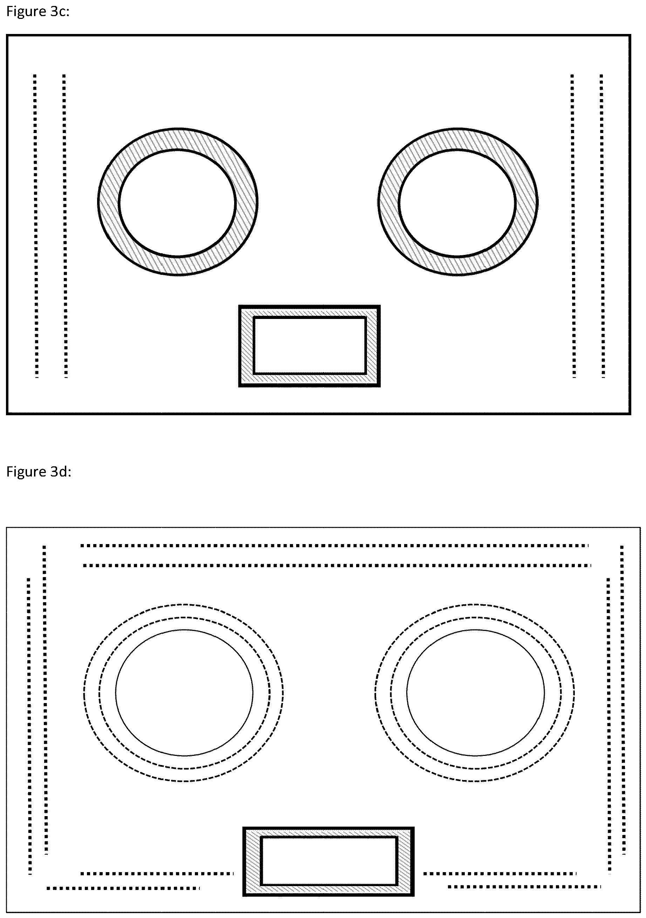

Figure 1 schematically shows an embodiment of the current disclosure where a spill retention mechanism is applied as a continuous strip around a portion of a cooktop inward from the perimeter in order to surround the heating elements and the control panel, while Figure 2 schematically shows an embodiment where a spill retention mechanism is applied to a similar location but as two parallel lines. The location and shape of the spill retention mechanism is not particularly limited, provided that the spill retention mechanism is located where it is desirable to hinder the movement of spills. For example, the spill retention mechanism may be straight, curved, or any other shape, including dashed and segmented. Figure 3A shows in a schematic view a spill retention mechanism applied as a strip inward from the perimeter of a cooktop. Figure 3B shows in a schematic view a spill retention mechanism applied as a strip inward from the perimeter of a cooktop and that also surrounds typical locations for a cooktop control panel and heating elements. Figure 3C shows in a schematic view a spill retention mechanism applied as two parallel lines inward from the side perimeters of a cooktop with a strip surrounds typical locations for a cooktop control panel and heating elements. Figure 3D shows in a schematic view a spill retention mechanism applied as two parallel lines inward from the top, bottom and side perimeters of a cooktop with two parallel strips surrounding typical locations for cooktop heating elements and a strip surrounding a typical location for a cooktop control panel.

The spills can be hindered due to the physical properties of the frit such as the surface roughness of the frit. The arithmetic mean surface roughness (Ra) of the frit can for example be 0.1-10 µm, 0.1-5 µm, 0.1-2 µm, 0.1-1 µm, or 0.5-0.7 µm. The mean roughness depth (Rz) measuring the average maximum peak to valley can be 1-15 µm, 1-10 µm, or 1-5 µm. If the surface is too rough, cleaning might be difficult. If the surface is too smooth, the movement of spilled liquids might not be sufficiently hindered.

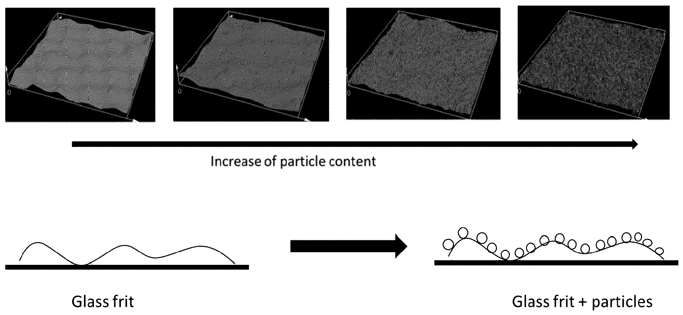

In some embodiments, the frit may include particles, which can be geometric particles having a defined shape that mix into the frit and do not significantly chemically react with the frit. The particles can modify the surface roughness of the frit and can increase the active surface area for liquid contact. In some embodiments, the arithmetic mean surface roughness of the frit having the particles can for example be 0.1-15 µm, 0.1-10 µm, 0.1-5 µm, 0.4-2.5 µm, 0.5-2.0 µm, or 0.6-1.0 µm. The mean roughness depth (Rz) measuring the average maximum peak to valley can be 1-20 µm, 1-15 µm, or 5-15 µm. Figure 4 shows that a frit alone has a certain surface roughness, and as particles are incorporated into the frit, the surface roughness is changed. Figure 4 also shows that a portion of some of the particles can protrude from the uppermost surface of the frit (particles are also wholly within the interior of the frit, but this is not shown in Figure 4).

The type of particles added to the frit is not particularly limited. Suitable particles include silicon nitrides, boron nitrides, aluminum nitrides, zirconium nitrides, silicone microspheres such as Tospearls from Momentive, ceramic microspheres such Zeospheres from 3M, hollow or solid glass spheres composed of borosilicate glass or another glass type, or a combination thereof. In some embodiments, the particles can have a D50 grain size of 1-100 µm, 1-50 µm, 1-20 µm, 5-15 µm, or 2-5 µm.

Although the particles can be hydrophobic, adequate spill hindrance can be obtained by incorporating the particles in the frit in a low percentage where spill hindrance is primarily achieved by the physical attributes of the material and not the hydrophobic nature of the particles. For example, the particles can be included in the frit in an amount of 0.5-50 wt%, 0.5-30 wt%, 1-10 wt%, 5-15 wt% or 15-25 wt%. In some embodiments, the contact angle between water and the substrate with the frit, with or without the particles, after cleaning with isopropanol and without any heating, can for example be 90 degrees or less, 80 degrees or less, 70 degrees or less, 60 degrees or less, 50 degrees or less, or 40 degrees or less, and/or 10 degrees or more, 20 degrees or more, 30 degrees or more, 40 degrees or more, or 50 degrees or more.

In some embodiments, spills can be hindered when the thickness of the frit (measured in the vertical direction) is 0.5-50 µm, 1-20 µm, or 1-7 µm. When particles are included in the frit, spills can be hindered when the thickness of the frit with particles is 1-50 µm, 2-20 µm, or 2-8 µm.

Particles that have a generally round shape, such as Tospearls, compared to an irregular shape, such as Zeospheres, are generally more resistant to abrasion during cleaning by scrubbing and may also better insulate the frit from being contacted when scrubbing. In some embodiments, the sphericity of the particles can be greater than 0.5, greater than 0.6, greater than 0.7, greater than 0.8, greater than 0.9 or greater than 0.95.

When the spill retention mechanism is used on a cooktop, the composition of the frit and the particles should be selected to withstand typical cooking temperatures, which can exceed 100 °C at the perimeter of the cooktop.

Conventional frits used for decoration usually require pigments to view the decoration. In contrast, the frits described herein, with or without the particles, do not need to be viewable, and it may be more aesthetically desirable for the spill retention mechanism to be difficult to view, so the frits may or may not include pigments. For example, the spill retention mechanisms described herein can be substantially transparent and/or substantially translucent. Substantially transparent and substantially translucent mean that 50-90% of visible light is transmitted through the spill retention mechanism. Transparent and translucent mean that more than 90% of visible light is transmitted through the spill retention mechanism.

As an additional or alternate spill retention mechanism to the frit with or without the particles, the surface of the substrate can be sandblasted. Sandblasting provides the substrate with a surface roughness that can hinder the movement of spilled liquids. In some embodiments, the arithmetic mean surface roughness (Ra) of the sandblasted substrate can be 0.5-15 µm, 0.5-10 µm, 0.5-5 µm, 2-4.5 µm, or 2.5-3.5 µm and/or the mean roughness depth (Rz) measuring the average maximum peak to valley can be 5-40 µm, 10-30 µm, 10-25 µm, or 15-25 µm. As with the frit, if the sandblasted surface is too rough, cleaning might be difficult, and if the sandblasted surface is too smooth, the spilled liquids might easily travel. Also as with the frit, the location and shape of the sandblasted area of the surface is not particularly limited, provided that the substrate is sandblasted in a location where it is desirable to hinder the movement of spills.

Sandblasting can form a series of irregular peaks and valleys in the substrate surface. Since the peaks are valleys are beneath the uppermost surface of the substrate, the sandblasted surface can function like a drain that collects and directs the spilled liquid in a certain direction.

The spill retention mechanisms disclosed herein can hinder at least 1 ml of spills per 25 cm² of spill retention mechanism.

The substrates may include one or more spill retention mechanisms, such as the frit described herein, the frit with particles described herein, a sandblasted area, a conventional frame, or a combination thereof. In addition, a multi-layer spill retention mechanism can be used, such as a base layer of a frit, with or without pigments, and a top layer of a frit with particles.

### Examples

### Example 1

The following four samples were prepared:

| | |
|---|---|
| Sample A. | Glass frit without particles |
| Sample B. | 98 wt% of Sample A plus 2 wt% of Tospearls 145A (grain size of 4-5 microns) |
| Sample C. | 90 wt% of Sample A plus 10 wt% of Tospearls 145A |
| Sample D. | 80 wt% of Sample A plus 20 wt% of Tospearls 145A |

Samples A-D were screen printed onto a glass-ceramic cooktop in two patterns. The first pattern was a strip surrounding the central portion of the cooktop, where three samples were prepared having a strip width of 5, 8 and 12 mm, respectively. The second pattern also surrounded the central portion, but the pattern consisted of two parallel lines of material each having a width of about 1 mm. Samples A-D were applied at a thickness of 2-5 microns.

Certain liquids were spilled on the samples and the contact angle between the samples and the liquid droplets was measured using the contact angle measuring machine DSA 30 S from Krüss. The contact angle was measured at the interface between the droplet (sessile drop) and the surface of the substrate. Table 1 shows the contact angle measurements after the substrate was cleaned with isopropanol then heated to 350 C for one hour before the liquids were spilled. Table 2 shows the contact angle measurements after the substrate was cleaned with isopropanol without any subsequent heating.

**Table 1**

| | Water (°) | Ethylene glycol (°) | Methylene iodide (°) |
|---|---|---|---|
| Glass substrate alone | 11 | 5 | 5 |
| Glass frit | 15 | 5 | 39 |
| Glass frit + Tospearls | 6 | 5 | 40 |

**Table 2**

| | Water (°) | Ethylene glycol (°) | Methylene iodide (°) |
|---|---|---|---|
| Glass substrate alone | 45 | 34 | 42 |
| Glass frit | 38 | 32 | 47 |
| Glass frit + Tospearls | 59 | 45 | 41 |

The contact angle measurements show that the spill retention mechanisms do not exhibit hydrophobic behavior, where hydrophobic behavior is defined as a contact angle greater than 90 degrees.

### Example 2

Glass-ceramic cooktop samples ID, 3D and 5D were sandblasted. Their surface roughness and their effectivity as a barrier against 0.2-0.5 milliliter droplets of water was measured. The results are shown in Table 3.

**Table 3**

| | 1D(µm) | 3D(µm) | 5D(µm) |
|---|---|---|---|
| Ra | 2,833 | 3,031 | 3,279 |
| Rz | 19,309 | 17,222 | 15,397 |
| Depth/Height | 2 | 12 | 18 |

Table 3 shows that the depth/height of the sandblasted area increased as the arithmetic mean surface roughness (Ra) increased and the mean roughness depth (Rz) decreased. Measurements of the surface roughness were evaluated using the Olympus OLS5000/ 3D Lasermicroscope with the analysis software provided.

## Claims

1. A substrate having a spill retention mechanism that hinders movement of a liquid that spills on the substrate, wherein the spill retention mechanism is applied to an upper surface of the substrate, and wherein the spill retention mechanism comprises a glass or a glass-ceramic frit.

2. The substrate of claim 1, wherein the spill retention mechanism is applied at or 1 inch inward from one or more edges of the substrate.

3. The substrate of claim 1, wherein the spill retention mechanism is applied completely or partially around a location for a heating element or a control panel.

4. The substrate of one or more of the preceding claims, wherein the frit has a D50 grain size of 0.1-60 µm.

5. The substrate of one or more of the preceding claims, wherein the frit has an arithmetic mean surface roughness (Ra) of 0.1-10 µm.

6. The substrate of one or more of the preceding claims, wherein the frit comprises silicon nitride particles, boron nitride particles, aluminum nitride particles, zirconium nitride particles, silicone microsphere particles, ceramic microsphere particles, hollow or solid glass sphere particles, or a combination thereof.

7. The substrate of one or more of the preceding claims, wherein the frit comprising the particles has a mean roughness depth (Rz) of 1-15 µm.

8. The substrate of one or more of the preceding claims, wherein the particles are included in the frit in an amount of 0.5-50 wt%.

9. The substrate of one or more of the preceding claims, wherein the frit has a thickness of 0.5-50 µm.

10. The substrate of one or more of the preceding claims, wherein the particles have a sphericity of greater than 0.5.

11. The substrate of one or more of the preceding claims, wherein the spill retention mechanism is substantially transparent and/or substantially translucent.

12. The substrate of one or more of the preceding claims, wherein the spill retention mechanism can hinder at least 1 ml of spills per 25 cm² of the spill retention mechanism.

13. A substrate having a spill retention mechanism that hinders movement of a liquid that spills on the substrate, wherein the spill retention mechanism is provided by sandblasting an upper surface of the substrate.

14. The substrate of claim 13, wherein the spill retention mechanism is applied at or 1 inch inward from one or more edges of the substrate.

15. The substrate of claim 13, wherein the spill retention mechanism is applied completely or partially around a location for a heating element or a control panel.

16. The substrate of one or more of claims 13 to 15, wherein the sandblasted substrate has an arithmetic mean surface roughness (Ra) of 0.5-15 µm.

17. The substrate of one or more of claims 13 to 15, wherein the sandblasted substrate has a mean roughness depth (Rz) of 5-40 µm.

18. The substrate of one or more of claims 13 to18, wherein the spill retention mechanism can hinder at least 1 ml of spills per 25 cm² of the spill retention mechanism.
